# EUROPÄISCHE PATENTSCHRIFT

(11) **EP 1 759 793 B1**
(45) Veröffentlichungstag und Bekanntmachung des Hinweises auf die Patenterteilung: **30.09.2009**
(21) Anmeldenummer: 06016825.9
(22) Anmeldetag: 11.08.2006
(51) Int. Cl.: B23B 31/14, B23B 31/16

(54) **Spannfutter**
Chuck
Mandrin

(30) Priorität: 31.08.2005 DE 102005041518
(43) Veröffentlichungstag der Anmeldung: 07.03.2007
(73) Patentinhaber: Schunk GmbH & Co. KG Spann- und Greiftechnik, 74348 Lauffen (DE)
(72) Erfinder: Gross, Johann, 74081 Heilbronn (DE)
(74) Vertreter: Paul, Dieter-Alfred

(56) Entgegenhaltungen:
- EP-A- 0 865 853
- DE-B3- 10 241 826
- DE-C1- 3 822 506
- US-A- 4 422 655

## Beschreibung

Die vorliegende Erfindung betrifft ein Spannfutter gemäß dem Oberbegriff des Anspruchs 1. Ein solches Spannfutter ist mit einem Futterkörper und Spannbacken ausgestaltet, die in radialen Bakkenführungen des Futterkörpers verstellbar angeordnet sind, wobei in dem Futterkörper Taschen ausgebildet sind, in denen Förderelemente radial bewegbar geführt sind, und Mittel vorgesehen sind, um Schmiermittel, das sich in den Taschen sammelt, durch die Radialbewegung der Förderelemente in Schmierbohrungen und über diese zu gewünschten Schmierstellen zu pumpen.

Spannfutter dieser Art sind beispielsweise aus der DE 38 22 506 C1 bekannt und werden in der Praxis in erster Linie eingesetzt, um an Drehmaschinen die zu bearbeitenden Werkstücke zu spannen. Die herkömmlichen Spannfutter sind dabei nach Art eines Dreibackenfutters ausgebildet und besitzen drei Spannbacken, die in entsprechenden radialen Backenführungen des Futterkörpers angeordnet sind. Die Führung der Spannbacken in den Backenführungen erfolgt über entsprechende Führungsnuten und Führungsleisten, die an den Seitenflächen der Spannbacken sowie der Backenführungen ausgebildet sind.

Ein Problem, das bei herkömmlichen Spannfuttern häufig auftritt, besteht darin, daß mit zunehmender Umfangsgeschwindigkeit hohe Fliehkräfte auftreten, die dazu führen, daß die an sich vorgespannten Spannbacken nach außen gezogen werden und es somit zu einer Verringerung der Spannkraft kommt. Aus diesem Grund erfolgt bei dem aus der DE 38 22 506 C1 vorbekannten Spannfutter ein Fliehkraftausgleich über Fliehkraft-Ausgleichsgewichte, die jeweils unterhalb einer zugehörigen Spannbacke im Futterkörper verstellbar angeordnet und mit der Spannbacke über einen Spannhebel, der sich im Futterkörper schwenkbeweglich abstützt und an seinem einen Ende in einer Führungsausnehmung des Ausgleichsgewichts und mit seinem zweiten Ende in einer Führungsausnehmung der Spannbacke ruht, verbunden ist. Beim Auftreten von Fliehkräften wird der Spannhebel durch das Ausgleichsgewicht nach außen gezogen und überträgt gleichzeitig eine der Fliehkraft des Ausgleichsgewichts entgegenwirkende Kraft auf die Spannbakke, welche demzufolge nachgespannt wird.

Bei dem bekannten Spannfutter werden die radialen Bewegungen, welche die Fliehkraft-Ausgleichsgewichte bei einer Verstellung der Spannbacken ausführen, außerdem genutzt, um Schmierfett, welches im Betrieb durch die auftretenden Fliehkräfte aus den Backenführungen verdrängt wird und sich in den Taschen der Fliehkraft-Ausgleichsgewichte sammelt, wieder in den Bereich der Backenführungen zurück zu pumpen. Hierzu sind an der Unterseite der Fliehkraft-Ausgleichsgewichte, in den Hebeln und in den Spannbacken Schmiermittelkanäle ausgebildet, durch welche das Schmiermittel, welches sich im radial äußeren Bereich der Taschen sammelt, in den Bereich der Gleitflächen zwischen den Spannbacken und dem Futterkolben gedrückt wird, wenn die Fliehkraft-Ausgleichsgewichte bei einer Verstellung der Spannbacken nach innen radial nach außen verstellt werden und sich damit der radial äußere Bereich der Taschen verkleinert.

Nachteilig an dieser bekannten Lösung ist, daß die Pumpwirkung aufgrund der Bewegung der Fliehkraft-Ausgleichsgewichte nicht ausreichend ist, wenn die Taschen nur teilweise mit Schmierfett gefüllt sind, und zudem auch die Gefahr besteht, daß ein Teil des in den Schmiermittelkanälen enthaltenen Schmiermittels bei einer nach innen gerichteten Bewegung der Fliehkraft-Ausgleichsgewichte wieder in die Tasche zurückgesaugt wird.

Aufgabe der Erfindung ist es daher, ein Spannfutter der eingangs genannten Art so auszubilden, daß eine zuverlässige Förderung des Schmiermittels aus den Taschen in den Bereich der zu schmierenden Führungen gewährleistet ist.

Diese Aufgabe ist erfindungsgemäß durch die Merkmale des Anspruchs 1 gelöst. Ein erfindungsgemäßes Spannfutter unterscheidet sich von einem Spannfutter gemäß dem Stand der Technik dadurch, daß in jeder Tasche wenigstens ein Pumpkolben vorgesehen ist, der in einer Zylinderbohrung des in der Tasche bewegbaren Förderelements unter Bildung eines dazwischenliegenden Kolbenraums angeordnet und derart in der Tasche gehalten ist, daß das Förderelement sich bei seinen Radialbewegungen relativ zu dem Pumpkolben unter Verkleinerung bzw. Vergrößerung des Kolbenraums bewegt, daß der Pumpkolben mit einem radial äußeren, rohrförmigen Endabschnitt das Förderelement durchgreift und in den radial äußeren Bereich der Tasche hineinragt, wobei der rohrförmige Endabschnitt über einen verbindungskanal mit dem Kolbenraum verbunden ist, daß in dem Pumpkolben ein erstes Rückschlagventil vorgesehen ist, das einen Fluidstrom von der Tasche durch den rohrförmigen Endabschnitt und den Verbindungskanal in den Kolbenraum zuläßt, einen Schmiermittelstrom in die entgegengesetzte Richtung jedoch sperrt, und daß der Kolbenraum mit einer Schmierbohrung des Futterkörpers durch ein in dem Förderelement ausgebildeten Auslaßkanal verbunden ist und ein zweites Rückschlagventil vorgesehen ist, das einen Schmiermittelstrom von der Kolbenkammer zu dem Schmiermittelkanal erlaubt, jedoch ein Zurückströmen von Schmiermittel in der entgegengesetzten Richtung verhindert.

Der Erfindung liegt somit die Überlegung zugrunde, ein Pumpsystem vorzusehen, um die Förderung von Schmiermittel aus den Taschen hin zu den zu schmierenden Gleitflächen, welche primär durch die Verdrängungswirkung des sich in der Tasche nach außen bewegenden Förderelements bewirkt wird, zu unterstützen. Das Pumpsystem wird im wesentlichen gebildet von einem Pumpkolben, der insbesondere ortsfest an der radial inneren Taschenwandung gehalten wird und unter Bildung eines Kolbenraums in die Zylinderbohrung des Förderelements eingreift. Wenn das Förderelement radial nach außen bewegt wird, erfolgt diese Radialbewegung relativ zu dem feststehenden Pumpkolben, so daß sich der Kolbenraum vergrößert und entsprechend in ihm ein Unterdruck einstellt mit der Folge, daß Schmiermittel aus der Tasche durch den rohrförmigen Endabschnitt des Pumpkolbens in den Kolbenraum gesaugt wird. Dabei verhindert das zweite Rückschlagventil, daß auch Schmiermittel oder Luft aus den Schmierbohrungen des Futterkörpers angesaugt wird. Wenn das Förderelement radial nach innen bewegt wird, führt dies zu einer Verkleinerung des Kolbenraums mit der Folge, daß das darin befindliche Schmiermittel über das zweite Rückschlagventil in die Schmiermittelbohrungen und über diese zu den zu schmierenden Gleitflächen gedrückt wird. Dabei verhindert das erste Rückschlagventil ein Zurückströmen von Schmiermittel in die sich vergrößernde Tasche. Im Ergebnis wird eine zufriedenstellende Schmierung gewährleistet, auch wenn die Taschen nicht vollständig mit Schmiermittel gefüllt sind.

Von Vorteil ist weiterhin, daß die Position der Ansaugöffnung des rohrförmigen Endstücks des Pumpkolbens unabhängig von der Position des Förderelements in der Tasche ist. Da der Pumpkolben sich nicht bewegt, kann das Einlaßende des Pumpkolbens bis an die Außenwand der Tasche heranreichen, d.h. in einem Bereich, in dem sich auch dann noch Schmiermittel befindet, wenn die Tasche nur teilweise gefüllt ist.

Wenn die Förderelemente frei radial verschieblich in den Taschen gelagert sind, werden sie durch die auftretenden Zentrifugalkräfte automatisch nach außen gedrückt. In diesem Fall sind Rückstelleinrichtungen beispielsweise in der Form von Rückstellfedern vorgesehen, um sie in eine innere Ausgangsstellung zurückzubringen, wenn das Futter nicht rotiert wird.

In an sich bekannter Weise können die Förderelemente auch Fliehkraft-Ausgleichsgewichte sein, die mit den Spannbakken über Hebel gekoppelt sind.

Gemäß einer Ausführungsform der Erfindung ist vorgesehen, daß der Pumpkolben durch eine Schraubendruckfeder, die in dem Kolbenraum angeordnet ist und sich zwischen dem Pumpkolben und dem Förderer abstützt, gegen die radial innere Wandung der Tasche gedrückt wird. Hierdurch wird auf einfache Weise sichergestellt, daß der Pumpkolben an der Innenwandung der Tasche gehalten wird.

In Ausbildung der Erfindung kann das erste Rückschlagventil, welches ein Zurückströmen von Schmiermittel in die Tasche verhindert, in einer axialen Bohrung des Pumpkolbens untergebracht sein. In diesem Fall weist das Rückschlagventil zweckmäßigerweise eine Kugel als Ventilelement auf, die durch eine Schraubenfeder gegen einen Sitz gedrückt wird.

Um sicherzustellen, daß das geförderte Schmiermittel unabhängig von der Stellung des sich nach innen bewegenden Förderelements in die Schmierbohrung des Futterkörpers gelangt, ist gemäß einer weiteren Ausführungsform vorgesehen, daß der Auslaßkanal in eine radiale Übergabenut, die an der Oberseite des Fliehkraft-Ausgleichsgewichts und/oder der damit in Kontakt kommenden Fläche des Futterkörpers ausgebildet ist, mündet. Dabei kann der Auslaßkanal tangential an den Kolbenraum anschließen und sich insbesondere in Futterachsrichtung erstrecken.

Gemäß einer bevorzugten Ausführungsform der Erfindung ist vorgesehen, daß in jeder Tasche zwei Pumpkolben symmetrisch zur Mittelachse des Förderelements angeordnet sind. Diese Ausgestaltung hat den Vorteil, daß Unwuchten vermieden werden und des weiteren die Pumpsysteme in dem Fall, daß die Förderelemente als Fliehkraft-Ausgleichsgewichte ausgebildet sind, nicht mit dem Hebel, über welchen das Fliehkraft-Ausgleichsgewicht mit der zugehörigen Spannbacke gekoppelt ist, kollidieren. Außerdem ist es möglich, über die beiden Pumpsysteme parallel zueinander zwei korrespondierende Gleitflächen mit Schmiermittel zu versorgen.

In an sich bekannter Weise können die Taschen über einen umlaufenden Ringkanal miteinander in Verbindung stehen, so daß ein gleicher Füllstand in allen Taschen gewährleistet ist. Zweckmäßigerweise können in dem Futterkörper auch Schmiermittel-Reservoirbohrungen ausgebildet sein, die in Futterachsrichtung verlaufen und über den Ringkanal ebenfalls mit den Taschen verbunden sind. In Ausgestaltung dieser Ausführungsform weisen die Schmiermittel-Reservoirbohrungen an ihrem radial äußeren Bereich geneigte Außenfläche auf, so daß gespeichertes Schmiermittel durch die im Betrieb auftretende Fliehkraft in axialer Richtung zu dem Ringkanal und von dort in die Taschen transportiert wird.

Weiterhin kann in die zentrale Aufnahme des Spannfutters eine Schutzbüchse eingesetzt sein, welche zur Vorderseite des Futterkörpers hin konisch auseinanderlaufend ausgebildet ist. Auf diese konische Fläche auftropfendes Kühlwasser wird aufgrund des durch die Konizität entstehenden Gefälles in Verbindung mit der Zentrifugalkraft der Drehbewegung axial nach vorne zum Futtergesicht gefördert. Hierdurch kann ein großer Teil der sich im Wasser befindlichen Schmutzpartikel wieder nach vorne ausgeschwemmt werden. Außerdem können Dichtungen vorgesehen sein, um ein Eintreten von Kühlflüssigkeit von dem Bereich der Aufnahme in den Futterkörper zu verhindern und auf diese Weise Auswaschungen zu vermeiden.

Schließlich können in den Backenführungen radiale Ablaufnuten ausgebildet sein, durch welche Kühlmittel, das in den zwischen den Spannbacken und den Backenführungen gebildeten Spalt eindringt, radial aus dem Futterkörper herausgeleitet wird, ohne in den Bereich der miteinander in Eingriff stehenden Führungsleisten bzw. Führungsnuten von Spannbacke und Backenführung zu gelangen.

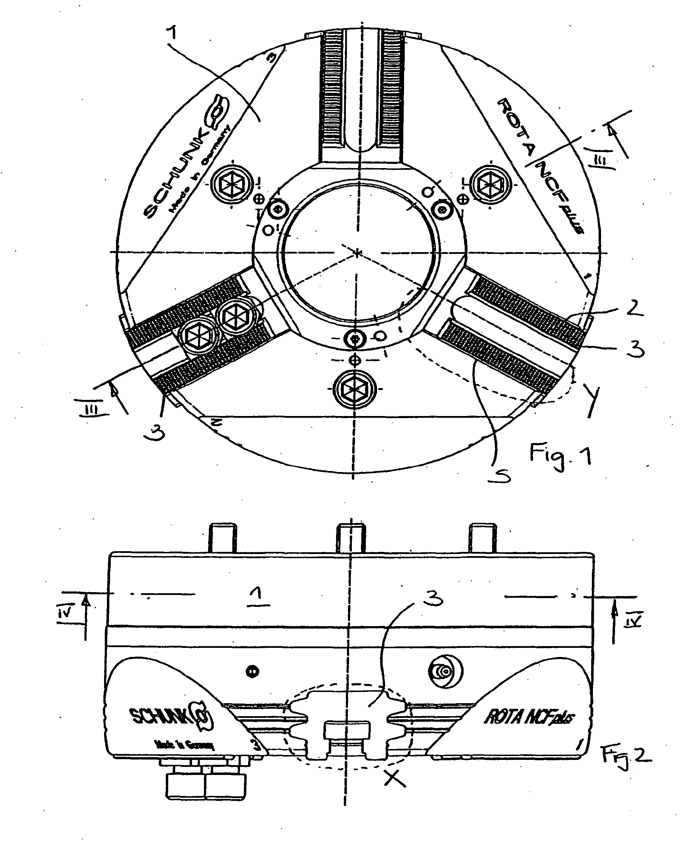

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: ein Spannfutter gemäß der vorliegenden Erfindung in Vorderansicht,
- Figur 2: das Spannfutter aus Figur 1 in Seitenansicht,

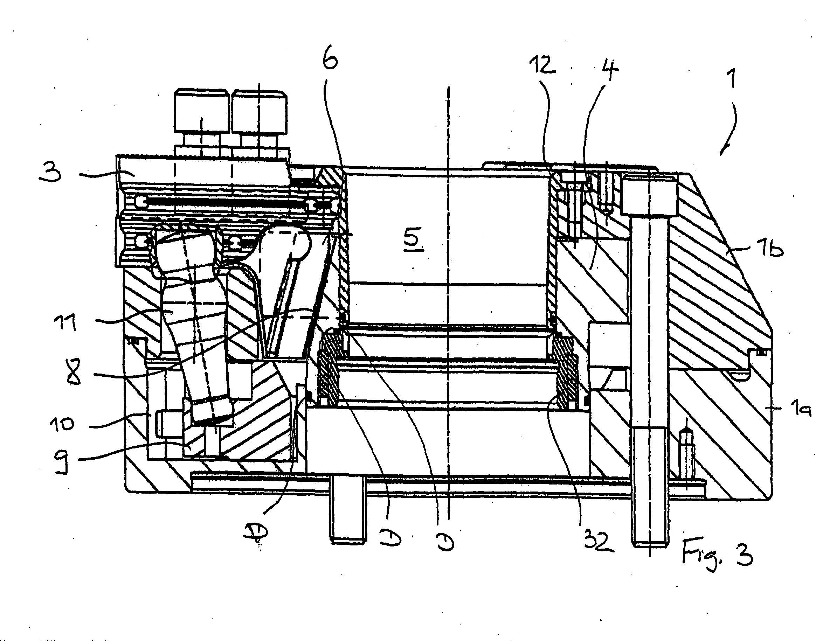

- Figur 3: das Spannfutter aus Figur 1 im Schnitt entlang der Linie III-III aus Figur 1,
- Figur 4: das Spannfutter aus Figur 1 im Schnitt entlang der Linie IV-IV aus Figur 2,
- Figur 5: das Spannfutser aus Figur 4 im Schnitt entlang der Linie C-C,
- Figur 6: das Spannfutter aus Figur 4 im Schnitt entlang der Linie G-G,
- Figur 7: das Spannfutter aus Figur 4 im Schnitt entlang der Linie B-B,
- Figur 8: das Spannfutter aus Figur 4 im Schnitt entlang der Linie H-H,

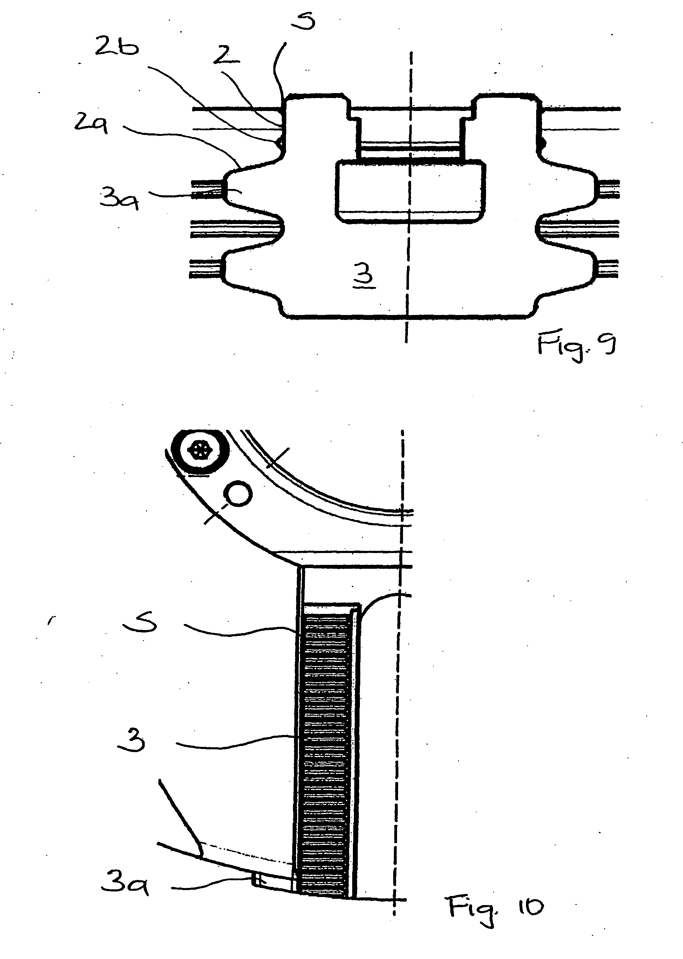

- Figur 9: den Ausschnitt X aus Figur 2 in vergrößerter Darstellung, und
- Figur 10: den Ausschnitt Y aus Figur 1 in vergrößerter Darstellung.

In den Figuren ist ein Kraftspannfutter gemäß der vorliegenden Erfindung dargestellt, das beispielsweise zum Spannen von Werkstücken an Drehmaschinen eingesetzt werden kann. Zu dem Spannfutter gehört ein Futterkörper 1, der axial unterteilt ist in einen Grundkörper 1a und einen Deckel 1b und eine zylindrische Grundform besitzt, und an der nicht dargestellten Spindel beispielsweise einer Drehmaschine festgeschraubt werden kann. In der einen, vorderen Stirnseite des Futterkörpers 1 sind radiale Backenführungen 2 vorgesehen, die gleichmäßig über den Umfang verteilt, d.h. mit jeweils 120° Versatz gegeneinander angeordnet sind. In die Backenführungen 2 sind Spannbacken 3 eingesetzt, die jeweils aus einer Grundbakke und einer daran aufschraubbaren Aufsatzbacke bestehen, wobei in der Zeichnung nur die Grundbacke dargestellt ist. Um die beim Spannen von Werkstücken unter Bearbeitung auftretenden Kräfte aufnehmen zu können, sind an den Seitenflächen der Spannbacken 3 und der Backenführungen 2 jeweils Führungsleisten 3a und damit in Eingriff stehende Führungsnuten 2a ausgebildet. Konkret sind an jeder Seitenfläche der Spannbacken 3 jeweils zwei Führungsleisten 3a trapezförmigen Querschnitts und in den Backenführungen 2 entsprechende Führungsnuten 2a ausgebildet. Des weiteren sind im Bereich der Backenführungen 2 zwischen den Führungsnuten 2a und der vorderen Stirnseite des Futterkörpers 1 radiale Ablaufnuten 2b ausgebildet. Diese dienen dazu, Kühlmittel, das in den zwischen den Spannbacken 3 und den Backenführungen 2 gebildeten Spalt von der vorderen Stirnseite des Futterkörpers 1 her eindringt, radial aus dem Futterkörper 1 herauszuleiten, ohne daß es in den Bereich der miteinander in Eingriff stehenden Führungsleisten 3a bzw. Führungsnuten 2a von Spannbacke 3 und Backenführung 2 gelangen kann.

In an sich bekannter Weise ist in die zentrale Aufnahme 5 des Spannfutters eine Schutzbüchse 12 eingesetzt. Die Schutzbüchse 12 ist zur Vorderseite des Futterkörpers 1 konisch auseinanderlaufend ausgebildet, so daß auf sie auftropfendes Kühlwasser aufgrund des durch die Konizität entstehenden Gefälles in Verbindung mit der Zentrifugalkraft der Drehbewegung axial nach vorne zum Futtergesicht gefördert wird. Hierdurch kann ein großer Teil der sich im Wasser befindlichen Schmutzpartikel wieder nach vorne ausgeschwemmt werden. Außerdem sind Dichtungen D vorgesehen, um ein Eintreten von Kühlflüssigkeit aus dem Bereich der Aufnahme in den Futterkörper 1 zu verhindern und auf diese Weise Auswaschungen zu vermeiden.

Außerdem sind Dichtungen D zwischen der Schutzbüchse 12 und dem Kolben 4, zwischen einer in die Aufnahme 5 von der hinteren Futterseite her eingeschraubten Zugbüchse 32 und dem Kolben 4 sowie zwischen dem Kolben 4 und der Aufnahme 5 vorgesehen, um das Eindringen von Kühlmittel in den Futterkörper 1 zu verhindern.

Die radiale Verstellung der Spannbacken 3 erfolgt durch einen Spannkolben 4, der in der zentralen Bohrung bzw. Aufnahme 5 des Futterkörpers 1 in axialer Richtung verschiebbar und durch hydraulische oder mechanische Antriebsmittel betätigbar ist. Der Spannkolben 4 ist mit den Grundbacken 3 über eine Keilhakenkopplung verbunden, wie sie an sich bekannt ist. Hierzu sind an den radial nach innen weisenden Enden der Grundbacken 3 jeweils T-förmige Keilhaken 6 ausgebildet, die in entsprechende T-förmige Keilnuten 7 des Spannkolbens 4 eingreifen. Die Keilhaken 6 und Keilnuten 7 weisen Keilflächen 8 auf, die im spitzen Winkel zur Futterkörperachse liegen und in der Weise miteinander zusammenwirken, daß eine Axialverstellung des Spannkolbens 4 in eine synchrone Radialbewegung der Grundbacken 3 umgesetzt wird.

Um die bei hohen Drehzahlen des Spannfutters auf die Spannbacken 3 einwirkenden Fliehkräfte zu beseitigen bzw. zu verringern, sind insgesamt drei Fliehkraft-Ausgleichsgewichte 9 vorgesehen. Jeder Spannbacke 3 ist ein derartiges Ausgleichsgewicht 9 zugeordnet, wobei das Ausgleichsgewicht 9 mittig hinter bzw. unterhalb der Spannbacke 3 in einer Tasche 10 des Futterkörpers 1 radial verschiebbar angeordnet und über einen im Futterkörper 1 abgestützten Hebel 11 mit der zugehörigen Spannbacke 3 verbunden ist. Die Zeichnung zeigt, daß der Hebel 11 mit einem vorderen Ende in eine Ausnehmung 3b der Spannbacke 3 eingreift, wohingegen sein hinteres Ende beweglich im Fliehkraft-Ausgleichsgewicht 9 angeordnet ist. Wenn im Betrieb auf die Spannbacke 3 radial nach außen gerichtete Fliehkräfte wirken, werden diese durch entsprechende Kräfte kompensiert, die aufgrund der auf die Ausgleichsgewichte 9 wirkenden Fliehkräfte die Hebel 11 belasten, so daß diese wiederum die Spannbacken 3 in zentipedaler Richtung belasten. Auf diese Weise kann zumindest ein Großteil der auf die Spannbacken 3 einwirkenden Fliehkräfte kompensiert werden.

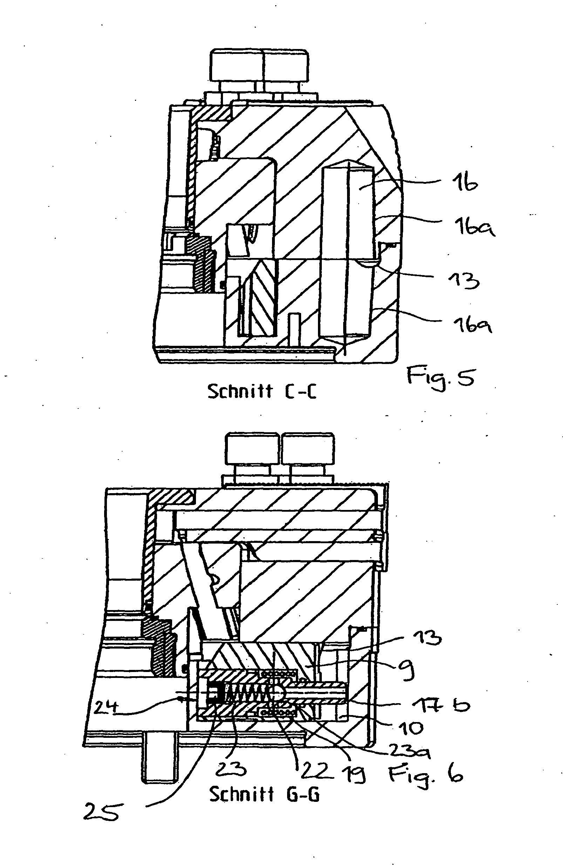

Die für die Fliehkraft-Ausgleichsgewichte 9 vorgesehenen Taschen 10 im Futterkörper 1 sind miteinander durch einen in dem Futterkörper 1 ausgebildeten Ringkanal 13, der hier als umlaufende Ringnut in der zum Deckel 1b weisenden Stirnfläche des Grundkörpers 1a ausgebildet und durch den Deckel 1a verschlossen ist. In dem Futterkörper 1 sind weiterhin mehrere Schmiermittel-Reservoirbohrungen 16 ausgebildet, die wie insbesondere in der Figur 5 gut erkennbar ist, in dem Grundkörper 1a sowie dem Deckel 1b ausgebildet sind und sich in Futterachsrichtung erstrekken, wobei die Schmiermittel-Reservoirbohrungen 16 in ihren radial äußeren Bereich geneigte Außenflächen 16a aufweisen, so daß gespeichertes Schmiermittel durch die im Betrieb auftretende Fliehkraft in axialer Richtung zu dem Ringkanal 13 transportiert wird.

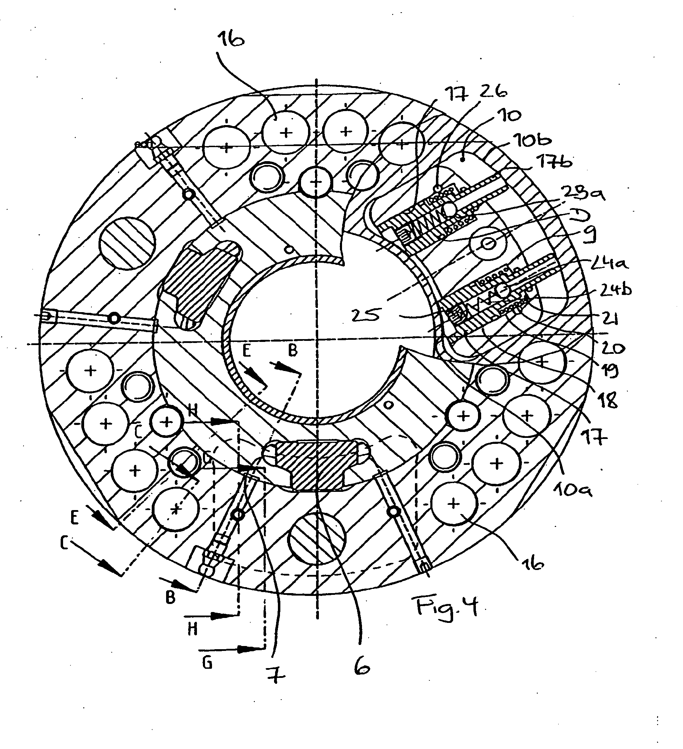

Um das Schmierfett, welches sich in den Taschen 10 befindet und im Betrieb durch die auftretenden Fliehkräfte auch von den radial innen gelegenen Führungsflächen in die Taschen 10 hineingedrückt wird, insbesondere an die Gleitflächen 7 zwischen Futterkolben 4 und Spannbacken 3 zu fördern, sind den Fliehkraft-Ausgleichsgewichten 9 jeweils zwei Pumpsysteme zugeordnet. Diese Pumpsysteme besitzen jeweils einen Pumpkolben 17, der in einer radialen Zylinderbohrung 18 des Fliehkraft-Ausgleichsgewicht 9 unter Bildung eines dazwischenliegenden Kolbenraums 19 radial verschiebbar angeordnet ist und durch eine Schraubendruckfeder 20, welche in dem Kolbenraum 19 angeordnet ist und sich zwischen dem Pumpkolben 17 und einem Absatz 21 des Fliehkraft-Ausgleichsgewichts 9 abstützt, gegen die Innenwandung 10a der Tasche 10 gedrückt wird. Der Pumpkolben 17 durchgreift mit seinem radial äußeren Endabschnitt 17b das Fliehkraft-Ausgleichsgewicht 9 und liegt, wie insbesondere die Figur 4 und die Figur 6 gut erkennen lassen, an der radialen Außenwandung 10b der Tasche 10 an. Der Pumpkolben 17 ist dabei rohrförmig ausgebildet, so daß der in die Tasche 10 hineinragende Endabschnitt 17b einen Ansaugstutzen bildet, durch welchen Schmiermittel aus der Tasche 10 über Verbindungskanäle 22 in den Kolbenraum 19 gelangen kann. Dabei gewährleistet die zylinderabschnittförmige Kontur der Außenwandung 10b der Tasche 10, daß stets ein Spalt zwischen dem Endabschnitt 17b des Pumpkolbens 17 und der Taschenwandung 10b vorhanden ist.

Die Figur 6 läßt deutlich erkennen, daß die Bohrung 23 innerhalb des Pumpkolbens 17 mit dem Kolbenraum 19 durch zwei radial in dem Pumpkolben 17 verlaufende Verbindungskanäle 22 verbunden ist, wobei in dem Pumpkolben 17 ein erstes Rückschlagventil 24 vorgesehen ist, welches ein Fluidstrom von der Tasche 10 in den Kolbenraum 19 zuläßt, einen Fluidstrom in umgekehrter Richtung jedoch sperrt. Das erste Rückschlagventil 24 wird hier von einer Kugel 24a gebildet, welche durch eine Schraubendruckfeder 24b gegen einen Absatz 23a der Bohrung 23, welcher als Ventilsitz ausgebildet ist, gedrückt wird. Die Schraubendruckfeder 24b stützt sich dabei an ihrem radial nach innen weisenden Ende an einem Gewindestift 25 ab, der in die Bohrung 23 eingeschraubt ist.

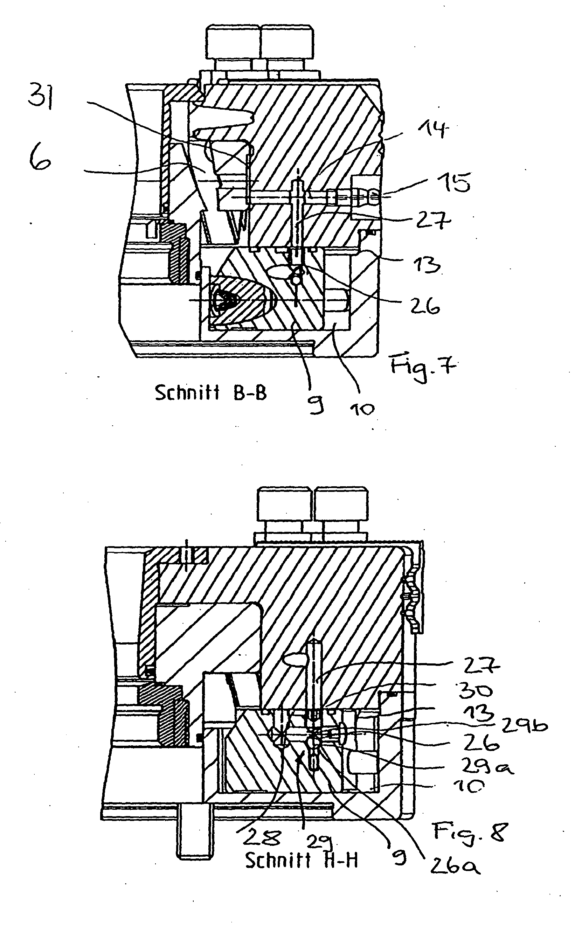

Die Figuren 4, 7 und 8 lassen in Zusammenschau gut erkennen, daß der Kolbenraum 19 über einen Auslaßkanal 26, welcher tangential an den Kolbenraum 19 anschließt, mit einer Schmierbohrung 27 des Futterkörpers 1 verbunden ist. Konkret mündet der Auslaßkanal 26 in eine radiale Übergabenut 28, die an der Oberseite des Fliehkraft-Ausgleichsgewichts 9 derart ausgebildet ist, daß die vertikale Schmierbohrung 27 unabhängig von der Stellung des Fliehkraft-Ausgleichsgewichts 9 stets in Fluidverbindung mit der Übergabenut 28 steht. An die Schmierbohrung 27 ist über einen Versorgungskanal 14 ein Schmiernippel 15 angeschlossen, über welchen ein geeignetes Schmierfett zugeführt werden kann.

In dem Auslaßkanal 26 des Fliehkraft-Ausgleichsgewichts 10 ist ein zweites Rückschlagventil 29 ausgebildet, das in gleicher Weise wie das erste Rückschlagventil 24 durch eine Kugel 29a gebildet wird, welche durch eine Schraubendruckfeder 29b gegen einen Sitz 26a gedrückt wird und sich an ihrem einen Ende an einem Gewindestift 30, der in den Auslaßkanal 26 eingeschraubt ist, abstützt. Das zweite Rückschlagventil 29 erlaubt einen Fluidstrom von dem Kolbenraum 19 zur Übergabenut 28, verhindert jedoch einen Strom in entgegengesetzter Richtung.

Die Schmierbohrung 27 des Futterkörpers 1 mündet in den radialen Innenbereich des Futterkörpers 1 in der Nähe der Keilhaken 6, über welche die Spannbacken 3 mit dem kraftbetätigten Kolben 4 gekoppelt sind. Dabei ist in dem Kolben 4 eine Übergabenut 31 vorgesehen, welche sicherstellt, daß die Schmierbohrung 27 mit der Übergabenut 31 unabhängig von der Kolbenstellung in Verbindung steht.

Wenn die Spannbacken 3 nach innen bewegt werden, führt dies dazu, daß sich die Fliehkraft-Ausgleichsgewichte 9 in den Taschen 10 radial nach außen bewegen. Dies hat zur Folge, daß sich der radial äußere Bereich der Taschen 10 verkleinert und das in den Taschen 10 vorhandene Schmierfett aus den Taschen 10 herausgedrückt wird, wobei ein Teil in die Pumpkolben 17 hineingedrückt wird. Gleichzeitig vergrößern sich die Kolbenräume 19, wenn die Fliehkraft-Ausgleichsgewichte 9 relativ zu den Pumpkolben 17 nach außen bewegt werden, mit der Folge, daß in den Kolbenräumen 19 ein Unterdruck entsteht und somit Schmiermittel aus den Taschen 10 angesaugt wird. Dabei verhindern die zweiten Rückschlagventile 29, daß auch Fluid aus den Schmierbohrungen 27 in die Kolbenräume 19 gesaugt wird.

Wenn die Spannbacken 3 zu einem späteren Zeitpunkt wieder auseinanderbewegt werden, verkleinern sich die Kolbenräume 19 mit der Folge, daß das in den Kolbenräumen 19 befindliche Schmiermittel über die zweiten Rückschlagventile 29 zu den Schmierbohrungen 27 in dem Futterkörper 1 und von dort aus zu den zu schmierenden Keilhaken 6 gefördert wird. Dabei verhindern die ersten Rückschlagventile 24 ein Zurückströmen von Schmiermittel aus den Kolbenräumen 19 in die Taschen 10.

## Patentansprüche

1. Spannfutter mit einem Futterkörper (1) und Spannbakken (3), die in radialen Backenführungen (2) des Futterkörpers (1) verstellbar angeordnet sind, wobei in dem Futterkörper (1) Taschen (10) ausgebildet sind, in denen Förderelemente (9) radial bewegbar geführt sind, und Mittel vorgesehen sind, um Schmiermittel, das sich in den Taschen (10) sammelt, durch die Radialbewegung der Förderelemente (9) in Schmierbohrungen (27) und über diese zu gewünschten Schmierstellen zu pumpen, **dadurch gekennzeichnet, daß** in jeder Tasche (10) wenigstens ein Pumpkolben (17) vorgesehen ist, der in einer Zylinderbohrung (18) des in der Tasche (10) bewegbaren Förderelements (9) unter Bildung eines dazwischenliegenden Kolbenraums (19) angeordnet und derart in der Tasche (10) gehalten ist, daß das Förderelement (9) sich bei seinen Radialbewegungen relativ zu dem Pumpkolben (17) unter Verkleinerung bzw. Vergrößerung des Kolbenraums (19) bewegt, daß der Pumpkolben (17) mit einem radial äußeren, rohrförmigen Endabschnitt (17b) das Förderelement (9) durchgreift und in den radial äußeren Bereich der Tasche (10) hineinragt, wobei der rohrförmige Endabschnitt (17b) über einen Verbindungskanal (22) mit dem Kolbenraum (19) verbunden ist, daß in dem Pumpkolben (17) ein erstes Rückschlagventil (24) vorgesehen ist, das einen Fluidstrom von der Tasche (10) durch den rohrförmigen Endabschnitt (17b) und den Verbindungskanal (22) in den Kolbenraum (19) zuläßt, einen Schmiermittelstrom in die entgegengesetzte Richtung jedoch sperrt, und daß der Kolbenraum (19) mit einer Schmierbohrung (27) des Futterkörpers (1) durch ein in dem Förderelement (9) ausgebildeten Auslaßkanal (26) verbunden ist und ein zweites Rückschlagventil (29) vorgesehen ist, das einen Schmiermittelstrom von der Kolbenkammer (19) zu dem Schmiermittelkanal (27) erlaubt, jedoch ein Zurückströmen von Schmiermittel in der entgegengesetzten Richtung verhindert.

2. Spannfutter nach Anspruch 1, **dadurch gekennzeichnet, daß** das radial äußere Ende des rohrförmigen Endabschnitts (17b) an der Außenwandung (10b) der Tasche (10) anliegt.

3. Spannfutter nach einem der vorherigen Ansprüche, **dadurch gekennzeichnet, daß** das erste Rückschlagventil (24), welches ein Zurückströmen von Schmiermittel in die Tasche (10) verhindert, in einer axialen Bohrung (23) des Pumpkolbens (17) untergebracht ist.

4. Spannfutter nach Anspruch 3, **dadurch gekennzeichnet, daß** das erste Rückschlagventil (24) eine Kugel (24a) als Ventilelement aufweist, die durch eine Schraubendruckfeder (24b) gegen einen Sitz (23a) gedrückt wird.

5. Spannfutter nach einem der vorherigen Ansprüche, **dadurch gekennzeichnet, daß** der Auslaßkanal (26) tangential an den Kolbenraum (19) anschließt.

6. Spannfutter nach einem der vorherigen Ansprüche, **dadurch gekennzeichnet, daß** der Auslaßkanal (26) in eine radiale Übergabenut (28), die an der Oberseite des Förderelements (9) und/oder einer damit in Kontakt kommenden Fläche des Futterkörpers (1) ausgebildet ist, mündet.

7. Futterkörper nach einem der vorherigen Ansprüche, **dadurch gekennzeichnet, daß** das zweite Rückschlagventil (29) in dem Förderelement (9) ausgebildet ist.

8. Spannfutter nach einem der vorherigen Ansprüche, **dadurch gekennzeichnet, daß** die Schmierbohrung (27) des Futterkörpers (1) in den radial inneren Bereich des Futterkörpers (1) in der Nähe von Keilhaken (6), über welche die Spannbacken (3) mit einem kraftbetätigten Kolben (4) gekoppelt sind, transportiert wird.

9. Spannfutter nach einem der vorherigen Ansprüche, **dadurch gekennzeichnet, daß** in jeder Tasche (10) zwei Pumpkolben (17) symmetrisch zur Mittelachse des Förderelements (9) angeordnet sind.

10. Spannfutter nach einem der vorherigen Ansprüche, **dadurch gekennzeichnet, daß** Rückführeinrichtungen vorgesehen sind, durch welche die Förderelemente (9) bei nicht rotierendem Spannfutter in eine radial innere Ausgangsstellung, in der sie insbesondere an der radial inneren Wandung (10a) der zugehörigen Tasche (10) anliegen, bewegt werden.

11. Spannfutter nach einem der vorherigen Ansprüche, **dadurch gekennzeichnet, daß** der Pumpkolben (17) durch eine Schraubendruckfeder (20), die in dem Kolbenraum (19) angeordnet ist und sich zwischen dem Pumpkolben (17) und dem Förderelement (9) abstützt, gegen die radial innere Wandung (10b) der Tasche (10) gedrückt wird.

12. Spannfutter nach einem der vorherigen Ansprüche, **dadurch gekennzeichnet, daß** die Förderelement (9) als Fliehkraft-Ausgleichsgewichte ausgebildet sind, die jeweils über einen Hebel mit einer Spannbacke (3) gekoppelt sind.

13. Spannfutter nach einem der vorherigen Ansprüche, **dadurch gekennzeichnet, daß** die Taschen (10) über einen umlaufenden Ringkanal (13) miteinander in Verbindung stehen.

14. Spannfutter nach Anspruch 13, **dadurch gekennzeichnet, daß** in dem Futterkörper (1) Schmiermittel-Reservoirbohrungen (16) ausgebildet sind, die in Futterachsrichtung verlaufen und über den Ringkanal (13) mit den Taschen (10) verbunden sind.

15. Spannfutter nach Anspruch 14, **dadurch gekennzeichnet, daß** die Schmiermittel-Reservoirbohrungen (16) in ihrem radial äußeren Bereich geneigte Außenflächen (16a) aufweisen, so daß in ihnen gespeichertes Schmiermittel durch die im Betrieb auftretende Fliehkraft in axialer Richtung zu dem Ringkanal (13) transportiert wird.

16. Spannfutter nach einem der vorherigen Ansprüche, **dadurch gekennzeichnet, daß** in die zentrale Aufnahme des Spannfutters (1) eine Schutzbüchse (12) eingesetzt ist und die Schutzbüchse (12) zur Vorderseite des Futterkörpers (1) konisch auseinanderlaufend ausgebildet ist.

17. Spannfutter nach Anspruch 16, **dadurch gekennzeichnet, daß** Dichtungen (D) vorgesehen sind, um ein Eintreten von Kühlflüssigkeit von dem Bereich der Aufnahme in den Futterkörper (1) zu verhindern.

18. Spannfutter nach einem der vorherigen Ansprüche, **dadurch gekennzeichnet, daß** in den Backenführungen (2) radiale Ablaufnuten (2b) ausgebildet sind, durch welche Kühlmittel, das in den zwischen den Spannbacken (3) und den Backenführungen (2) gebildeten Spalt eindringt, radial aus dem Futterkörper (1) herausgeleitet wird, ohne in den Bereich der miteinander in Eingriff stehenden Führungsleisten (3a) und Führungsnuten (2a) der Spannbacken und Backenführungen zu gelangen.

## Claims

1. A clamping chuck, having a chuck body (1) and clamping jaws (3) that are arranged shiftably in radial jaw guides (2) of the chuck body (1), pockets (10) in which conveying elements (9) are guided in radially movable fashion being embodied in the chuck body (1), and means being provided for pumping lubricant that collects in the pockets (10) into lubricating orifices (27), and through the latter to desired lubrication points, by way of the radial motion of the conveying elements (9),
wherein there is provided in each pocket (10) at least one pump piston (17) that is arranged in a cylinder bore (18) of the conveying element (9) that is movable in the pocket (10), forming a piston space (19) located therebetween, and is held in the pocket (10) in such a way that the conveying element (9), in the context of its radial motions, moves relative to the pump piston (17) while making the piston space (19) smaller and larger;
the pump piston (17) protrudes, with a radially outer, tubular end portion (17b), through the conveying element (9) and projects into the radially outer region of the pocket (10), the tubular end portion (17b) being connected via a connecting conduit (22) to the piston space (19);
a first nonreturn valve (24), which permits a fluid flow from the pocket (10) through the tubular end portion (17b) and the connecting conduit (22) into the piston space (19) but blocks a lubricant flow in the opposite direction, is provided in the pump piston (17); and
the piston space (19) is connected to a lubricating orifice (27) of the chuck body (1) through an outlet conduit (26) embodied in the conveying element (9), and a second nonreturn valve (29) is provided which allows a lubricant flow from the piston chamber (19) to the lubricant conduit (27) but prevents a backflow of lubricant in the opposite direction.

2. The clamping chuck according to Claim 1,
wherein the radially outer end of the tubular end portion (17b) rests against the outer wall (10b) of the pocket (10).

3. The clamping chuck according to one of the preceding claims,
wherein the first nonreturn valve (24) that prevents a backflow of lubricant into the pocket (10) is housed in an axial orifice (23) of the pump piston (17).

4. The clamping chuck according to Claim 3,
wherein the first nonreturn valve (24) comprises, as a valve element, a ball (24a) that is pressed by a helical compression spring (24b) against a seat (23a).

5. The clamping chuck according to one of the preceding claims,
wherein the outlet conduit (26) connects tangentially to the piston space (19).

6. The clamping chuck according to one of the preceding claims,
wherein the outlet conduit (26) opens into a radial transfer groove (28) that is embodied on the upper side of the conveying element (9) and/or on a surface, coming into contact therewith, of the chuck body (1).

7. The clamping chuck according to one of the preceding claims,
wherein the second nonreturn valve (29) is embodied in the conveying element (9).

8. The clamping chuck according to one of the preceding claims,
wherein the lubricating orifice (27) of the chuck body (1) is transported [sic] into the radially inner region of the chuck body (1) in the vicinity of wedge hooks (6) by way of which the clamping jaws (3) are coupled to a power-actuated piston (4).

9. The clamping chuck according to one of the preceding claims,
wherein two pump pistons (17) are arranged in each pocket (10), symmetrically with respect to the center axis of the conveying element (9).

10. The clamping chuck according to one of the preceding claims,
wherein return devices are provided with which, when the clamping chuck is not rotating, the conveying elements (9) are moved into a radially inner initial position in which they rest, in particular, against the radially inner wall (10a) of the associated pocket (10).

11. The clamping chuck according to one of the preceding claims,
wherein the pump piston (17) is pressed against the radially inner wall (10b) of the pocket (10) by a helical compression spring (20) that is arranged in the piston space (19) and is braced between the pump piston (17) and the conveying element (9).

12. The clamping chuck according to one of the preceding claims,
wherein the conveying elements (9) are embodied as centrifugal force compensation weights that are each coupled to a clamping jaw (3) via a lever.

13. The clamping chuck according to one of the preceding claims,
wherein the pockets (10) are in communication with one another via a peripheral annular conduit (13).

14. The clamping chuck according to Claim 13,
wherein lubricant reservoir orifices (16), which extend in the axial direction of the chuck and are connected to the pockets (10) via the annular conduit (13), are embodied in the chuck body (1).

15. The clamping chuck according to Claim 14,
wherein the lubricant reservoir orifices (16) have inclined outer surfaces (16a) in their radially outer region, so that lubricant stored in them is transported, by the centrifugal force occurring during operation, in the axial direction to the annular conduit (13).

16. The clamping chuck according to one of the preceding claims,
wherein a protective bushing (12) is inserted into the central receptacle of the clamping chuck (1), and the protective bushing (12) is embodied to diverge conically toward the front side of the chuck body (1).

17. The clamping chuck according to Claim 16,
wherein seals (D) are provided in order to prevent any entry of cooling fluid into the chuck body (1) from the region of the receptacle.

18. The clamping chuck according to one of the preceding claims,
wherein radial outlet grooves (2b) are embodied in the jaw guides (2), through which grooves coolant that penetrates into the gap formed between the clamping jaws (3) and the jaw guides (2) is directed radially out of the chuck body (1) without getting into the region of the mutually engaged guide rails (3a) and guide grooves (2a) of the clamping jaws and jaw guides.

## Revendications

1. Mandrin avec un corps de mandrin (1) et des mâchoires (3) qui sont positionnés d'une façon ajustable dans des guides radiales du corps de mandrin (2), en étant formés de sacs (10) dans le corps de mandrin (1), dans les quels il y a de composants de refoulement (9) guidés dans un mouvement radial, et des instruments pour pomper des produits lubrifiants collectés dans les sacs (10) par un mouvement radial des composants de refoulement (9) dans des perçages de lubrification (27) et par ceux-ci dans les points de lubrification désirés, **caractérisé en ce que** dans chaque sac (10) il y a au moins un piston de pompage (17) positionné dans un perçage du cylindre (18) du composant de refoulement (9) mouvable dans le sac (10) en formant un espace du piston (9) intermédiaire et tenu dans le sac (10) d'une façon que le composant de refoulement (9) pendant ses mouvements radiaux relative au piston de pompage (17) mouve en agrandissant et réduisant l'espace du piston (19), que le piston du pompage (17) pénètre le composant de refoulement (9) avec une section finale ayant la forme d'un tube (17b) et entre dans le secteur radial externe du sac (10), en étant la section finale ayant la forme d'un tube (17b) connecté avec l'espace du piston (19) par un canal de connexion (22), que dans le piston du pompage (17) il y a une première valve de retenue (24) qui fait entrer un courant fluide du sac (10) dans l'espace du piston (19) par la section finale ayant la forme d'un tube (17b) et le canal de connexion (22), mais bloque un courant de lubrifiant en direction opposée, et que l'espace du piston (19) est connecté avec un perçage de lubrifiant (27) du corps de mandrin (1) par un canal de sortie (26) et une deuxième valve de retenue (29) est prévue qui permet un courant de lubrifiant de la chambre du piston (19) vers le canal de lubrifiant (27), sans empêcher un retour du lubrifiant dans la direction opposée.

2. Mandrin selon revendication 1, **caractérisé en ce que** la section radiale extérieure finale de la section finale ayant la forme d'un tube (17b) est adjacente à la paroi extérieure (10b) du sac (10).

3. Mandrin selon une des revendications précédentes, **caractérisé en ce que** la première valve de retenue (24) qu'empêche le retour du lubrifiant dans le sac (10) est positionnée dans un perçage axial (23) du piston de pompage (17).

4. Mandrin selon revendication 3, **caractérisé en ce que** la première valve de retenue (24) qui présente une boule (24a) comme élément de valve pressé contre un logement (23a) par un ressort de compression (24b).

5. Mandrin selon une des revendications précédentes, **caractérisé en ce que** le canal de sortie (26) est tangentiellement adjacent à la chambre du piston (19).

6. Mandrin selon une des revendications précédentes, **caractérisé en ce que** le canal de sortie (26) débouche dans un rainure radiale de transmission (28) formé dans la partie supérieure du composant de refoulement (9) et/ou dans une surface du corps du mandrin (1) en contact avec elle.

7. Mandrin selon une des revendications précédentes, **caractérisé en ce que** la deuxième valve de retenue (29) est développée dans le composant de refoulement (9).

8. Mandrin selon une des revendications précédentes, **caractérisé en ce que** le perçage de lubrification (27) du corps du mandrin (1) est transporté dans un secteur radial interne du corps du mandrin (1) auprès du crochet de la clavette (6) sur le quel les mâchoires (3) sont couplées avec un piston (4) activé par une force.

9. Mandrin selon une des revendications précédentes, **caractérisé en ce que** dans chaque sac (10) il y a deux pistons de pompage (17) ajustés symétriquement par rapport a l'axe intermédiaire du composant de refoulement (9).

10. Mandrin selon une des revendications précédentes, **caractérisé en ce que** ils sont prévus des dispositifs de retour par les quels les composants de refoulement (9) quand le mandrin ne se trouve pas dans un mouvement de rotation sont bougés vers une position de départ radiale interne dans la quelle ils sont adjacents en particulier à la paroi radiale interne (10a) du sac respectif (10).

11. Mandrin selon une des revendications précédentes, **caractérisé en ce que** le piston du pompage (17) par un ressort de compression (20) positionné dans la chambre du piston (19) et appuyé entre le piston du pompage (17) et le composant de refoulement (9) est pressé contre la paroi radiale interne (10a) du sac (10).

12. Mandrin selon une des revendications précédentes, **caractérisé en ce que** les composants de refoulement (9) sont formés comme poids de compensation de la force centrifuge qui sont respectivement accouplés avec une mâchoire (3) par un levier.

13. Mandrin selon une des revendications précédentes, **caractérisé en ce que** les sacs (10) sont connectés entre eux par un canal circulaire (13).

14. Mandrin selon revendication 13, **caractérisé en ce que** dans le corps du mandrin (1) il y a de perçages pour le réservoir du lubrifiant (16) en direction de l'axe du mandrin et connectés avec les sacs (10) par un canal circulaire (13).

15. Mandrin selon revendication 14, **caractérisé en ce que** les perçages pour le réservoir du lubrifiant (16) ont de surfaces extérieures (16) inclinées dans le secteur radial externe permettant le transport du lubrifiant collecté à l'intérieur dans la direction axiale par rapport au canal circulaire (13) par la force centrifuge active.

16. Mandrin selon une des revendications précédentes, **caractérisé en ce que** dans le dispositif de réception centrale du mandrin (1) il y a une douille de protection (12) et que la douille de protection (12) est développée d'une forme conique par rapport au côté frontal du corps du mandrin (1).

17. Mandrin selon revendication 16, **caractérisé en ce qu'**il y a de joints (D) pour empêcher la pénétration du liquide de refroidissement du secteur de réception dans le corps du mandrin (1).

18. Mandrin selon une des revendications précédentes, **caractérisé en ce que** dans les guides radiales de la mâchoire (2) il y a de rainures de sortie (2b) par les quels le liquide de refroidissement qui pénètre dans la fente entre les mandrins (3) et les guides de la mâchoire (2) sort radialement du corps du mandrin (1) sans entrer dans le secteur des listons de guide (3a) connectés entre eux et dans les rainures de guide (2a) des mandrins et des guides de la mâchoire (2).
